# EUROPÄISCHE PATENTSCHRIFT

(11) **EP 3 142 881 B1**
(45) Veröffentlichungstag und Bekanntmachung des Hinweises auf die Patenterteilung: **15.07.2020**
(21) Anmeldenummer: 15721163.2
(22) Anmeldetag: 27.04.2015
(51) Int. Cl.: B60J 7/02, B60J 7/043

(54) **ANORDNUNG MIT EINEM DECKEL FÜR EIN FAHRZEUGDACH**
ARRANGEMENT WITH A COVER FOR A VEHICLE ROOF
ENSEMBLE COMPRENANT UN COUVERCLE POUR UN TOIT DE VÉHICULE

(30) Priorität: 14.05.2014 DE 102014106806; 21.07.2014 DE 102014110234
(43) Veröffentlichungstag der Anmeldung: 22.03.2017
(73) Patentinhaber: Webasto SE, 82131 Stockdorf (DE)
(72) Erfinder: HÖLZEL, Dominik, 82140 Olching (DE)
(74) Vertreter: Epping - Hermann - Fischer
(86) Internationale Anmeldenummer: PCT/EP2015/059072
(87) Internationale Veröffentlichungsnummer: WO 2015/172999

(56) Entgegenhaltungen:
- EP-A1- 2 017 108
- DE-A1-102011 015 833
- DE-A1-102012 002 299

## Beschreibung

Die Erfindung betrifft eine Anordnung mit einem Deckel für ein Fahrzeugdach, der ausgehend von einer Schließstellung zum Verschließen einer Dachöffnung zum Öffnen durch Ausstellmittel in seinem hinteren Bereich anhebbar und nach hinten in eine Offenstellung verschiebbar ist.

Derartige Anordnungen mit einem Deckel für ein Fahrzeugdach sind aus dem Stand der Technik vielfach bekannt. Typischerweise wird bei einem Öffnungsvorgang einer Dachöffnung ein Antriebsschlitten in Fahrzeuglängsrichtung nach hinten verschoben. In seitlichen Bereichen des Deckels sind Ausstellmittel vorgesehen, um den Deckel anzuheben, bevor er weiter nach hinten in eine Offenstellung zum Freigeben der Dachöffnung verschoben wird.

Dabei wird zum Anheben oder Ausstellen des Deckels mittels des Antriebsschlittens eine Ausstellstange in Fahrzeuglängsrichtung nach hinten verschoben, welche über einen hinteren Ausstellhebel mit dem Deckel im hinteren Bereich gekoppelt ist. Anschließend wird, wenn der Deckel maximal ausgestellt beziehungsweise angehoben worden ist, bei einem weiteren Verschieben des Schlittens die Ausstellstange in der Führungsschiene verriegelt, sodass diese und auch der hintere Ausstellhebel in ihrer Position arretiert sind.

Wie aus der DE 102011015833 A1 bekannt, wird zur Verriegelung der Ausstellstange ein komplizierter Verriegelungsmechanismus verwendet, der aus mehreren Komponenten besteht. Insbesondere besteht dieser aus filigranen Bauteilen und einem oder mehreren Federelementen.

Eine Aufgabe, die der Erfindung zugrunde liegt, ist es, eine Anordnung mit einem Deckel für ein Fahrzeugdach zu beschreiben, welche sich durch einen einfachen, konstruktiven Aufbau eines Verriegelungsmechanismus auszeichnet.

Erfindungsgemäß wird eine Anordnung mit einem Deckel für ein Fahrzeugdach beschrieben, der ausgehend von einer Schließstellung zum Verschließen einer Dachöffnung zum Öffnen durch Ausstellmittel in seinem hinteren Bereich anhebbar und nach hinten über das Fahrzeugdach in eine Offenstellung verschiebbar ist. Die Ausstellmittel weisen einen in Fahrzeuglängsrichtung mittels eines Antriebs in einer Führungsschiene verschiebbaren Schlitten mit einer Schlittenkulisse auf. Die Ausstellmittel weisen des Weiteren eine bezüglich der Führungsschiene ortsfeste Kulisse auf. Schließlich weisen die Ausstellmittel eine mittels des Schlittens in Fahrzeuglängsrichtung verschiebbare Ausstellstange auf, welche in Schließstellung des Deckels mittels eines ersten Koppelelements mit der ortsfesten Kulisse und mittels eines zweiten Koppelelements mit der Schlittenkulisse gekoppelt ist. Die ortsfeste Kulisse und die Schlittenkulisse verlaufen bezüglich der Fahrzeuglängsrichtung zumindest teilweises gegenläufig derart, dass ausgehend von der Schließstellung des Deckels bei einem Verschieben des Schlittens die Ausstellstange zum Ausstellen eines hinteren Ausstellhebels zunächst relativ zur Führungsschiene verschoben wird und nach dem Ausstellen bei einem weiteren Verschieben des Schlittens verriegelt ist.

Das Verschieben des Deckels über das Fahrzeugdach bedeutet, dass der Deckel nach einem Anheben oder Ausstellen im Bereich einer hinteren Kante des Deckels über eine Außenseite des Fahrzeugdachs geschoben wird. Bevorzugt handelt es sich bei der Anordnung um eine Anordnung für ein Spoilerdach.

Die verwendeten Ortsangaben oder Richtungsangaben wie "hinten" oder "vorne" sind auf die Fahrzeuglängsrichtung bezogen. Die Fahrzeuglängsrichtung kann auch als Horizontalrichtung oder X-Richtung bezeichnet werden. Das Ausstellen oder Anheben des Deckels erfolgt im Wesentlichen in einer Vertikalrichtung beziehungsweise Z-Richtung. Dabei handelt es um ein mathematisches Rechtssystem. Unter dem hinteren Bereich des Deckels ist beispielsweise der Bereich zu verstehen, welcher ausgehend von einer Mitte des Deckels einem Fahrzeugheck zugewandt ist.

Die Anordnung sieht vor, dass die Ausstellstange sowohl mit der ortsfesten Kulisse als auch mit der Schlittenkulisse des Schlittens, welcher auch als Antriebsschlitten bezeichnet werden kann, gekoppelt ist. Die ortsfeste Kulisse und die Schlittenkulisse verlaufen zumindest teilweise gegenläufig. Dabei steuert die Schlittenkulisse bei Verschieben des Schlittens ausgehend von der Schließstellung des Deckels zunächst ein Verschieben der Ausstellstange relativ zu der Führungsschiene, um den hinteren Ausstellhebel auszustellen und den Deckel anzuheben. Dabei ist die Ausstellstange mit dem Schlitten mittels der Schlittenkulisse in X-Richtung verriegelt. Gleichzeitig ist bei Verschieben des Schlittens ausgehend von der Schließstellung des Deckels mittels der ortsfesten Kulisse eine Bewegung der Ausstellstange in X-Richtung freigegeben, während eine Bewegung in Z-Richtung verriegelt ist. Nach dem Ausstellen steuert die ortsfeste Kulisse, dass bei einem weiteren Verschieben des Schlittens die Ausstellstange bezüglich der Führungsschiene verriegelt ist. Gleichzeitig steuert die Schlittenkulisse, dass die Ausstellstange relativ bezüglich des Schlittens verschiebbar ist. Mit anderen Worten ist die Ausstellstange somit in X-Richtung in der ortsfesten Kulisse verriegelt, während die X-Verriegelung in der Schlittenkulisse nach dem Ausstellen aufgehoben ist. Dies wird insbesondere dadurch bewerkstelligt, dass die Schlittenkulisse und die ortsfeste Kulisse zumindest teilweise, beispielsweise in einem bezüglich der Fahrzeuglängsrichtung hinteren Bereich gegenläufig verlaufen. Insgesamt wechseln die beiden Kulissen jeweils ihre Verriegelungsart in X-Richtung bzw. Z-Richtung.

Das gegenläufige Verlaufen bedeutet, dass sich in Schließstellung des Deckels der Verlauf der einen Kulisse so ändert, dass ein Abstand zwischen dem Deckel und der Kulisse verringert wird, während der Verlauf der anderen Kulisse sich so verhält, dass ein Abstand zwischen dem Deckel und der anderen Kulisse vergrößert wird. Bevorzugt überkreuzen sich die Schlittenkulisse und die ortsfeste Kulisse in einer normal zur Y-Richtung ausgerichteten Projektionsebene. Insbesondere überkreuzen sie sich in dem Zustand, in welchem sich der Schlitten bzgl. der Fahrzeuglängsrichtung auf Höhe der ortsfesten Kulisse befindet und das Wechseln der Verriegelungsart der beiden Kulissen stattfindet. Dadurch wird eine kompakte und wenig Bauraum beanspruchende Ausgestaltung ermöglicht.

Die Anordnung ermöglicht somit einen Verriegelungsmechanismus zum Verriegeln der Ausstellstange, welcher nur sehr wenige Bauteile beziehungsweise Komponenten aufweist. Insbesondere sind keine filigranen Bauteile und Federelemente notwendig.

Außerdem müssen beispielsweise keine Aussparungen in die Führungsschiene eingebracht werden, wodurch Materialkosten und Fertigungskosten eingespart werden können. Insgesamt ist auch eine Montage der Anordnung deutlich vereinfacht und weniger zeitintensiv. Ein weiterer Vorteil zeigt sich in der Kraftübertragung, bei welcher keine abrupten Lastsprünge vorzufinden sind. Auch sind die genannten Komponenten wie die beiden Kulissen deutlich verschleißärmer im Vergleich zu Federelementen und filigranen Bauteilen. Des Weiteren wird zum Verriegeln der Ausstellstange diese nicht verbogen, sondern lediglich verschoben. Dadurch wird ein Verschleiß der Ausstellstange AS gering gehalten, wobei beispielsweise ein Ermüdungsversagen der Ausstellstange AS aufgrund von Biegewechselspannungen vermieden oder zumindest reduziert wird.

Weiterhin sind die Ausstellstange und die Koppelelemente der Ausstellstange starr miteinander verbunden. Beispielsweise sind die Koppelelemente und die Ausstellstange einstückig hergestellt. Dadurch entsteht nur eine kurze Toleranzkette für die Verriegelung der Ausstellstange. Unter einer Toleranzkette wird das Zusammenspiel mehrere mechanischer Komponenten verstanden unter Berücksichtigung von fertigungsbedingten Form- und/oder Lagetoleranzen. Je weniger Komponenten in der Bewegung zusammenwirken, desto weniger Toleranzen müssen kompensiert werden. Weitere Elemente, wie Federelemente oder andere, würden eine größere Toleranzkette bedingen, die berücksichtigt und kompensiert werden muss, um eine sichere Verriegelung zu gewährleisten. Aufgrund der geringen Toleranzkette werden zudem störende Geräusche wie Klappern und Schaltgeräusche vermieden.

Gemäß einer Ausgestaltung der Erfindung weist die ortsfeste Kulisse in Schließstellung des Deckels einen Verlauf auf, bei welchem ein Abstand zwischen der ortsfesten Kulisse und dem Deckel in Fahrzeuglängsrichtung nach hinten zunächst gleich bleibt und sich anschließend verändert. Unter der Abstandsveränderung wird dabei eine wesentliche Änderung des Abstands verstanden, wobei der Verlauf insbesondere kurven-, rampenförmig und/oder stufenförmig verläuft. Unter dem Gleichbleiben des Abstands wird dabei verstanden, dass sich der Abstand gar nicht oder lediglich in sehr geringem Maße, beispielsweise unter kleinem Winkel bezüglich der Fahrzeuglängsrichtung, verändert. Beispielsweise kann sich der Abstand zu dem Deckel nach hinten verringern oder vergrößern.

Gemäß einer weiteren Ausgestaltung der Erfindung weist der Verlauf in Schließstellung des Deckels der ortsfesten Kulisse bezüglich der Fahrzeuglängsrichtung nach hinten einen vorderen Abschnitt auf, in welchem der Abstand zwischen der ortsfesten Kulisse und dem Deckel gleich bleibt, und einen hinteren Abschnitt auf, in welchem sich der Abstand zwischen der ortsfesten Kulisse und dem Deckel in Fahrzeuglängsrichtung nach hinten vergrößert. Dabei ist das Gleichbleiben des Abstandes beziehungsweise die Änderung des Abstandes analog zu vorstehendem Absatz zu verstehen.

Bevorzugt befindet sich in Schließstellung des Deckels das erste Koppelelement in dem vorderen Abschnitt der ortsfesten Kulisse und in der Offenstellung des Deckels in dem hinteren Abschnitt der ortsfesten Kulisse.

Durch einen derartigen Verlauf der ersten Kulisse ist es möglich, dass bei Verschieben des Schlittens die Ausstellstange zunächst relativ bezüglich der ortsfesten Kulisse und somit relativ bezüglich der Führungsschiene verschoben werden kann, also bezüglich der ortsfesten Kulisse nicht in X-Richtung verriegelt ist. Dadurch ist ein Ausstellen des hinteren Hebels mittels der Ausstellstange steuerbar.

Gemäß einer weiteren Ausgestaltung der Erfindung weist die Schlittenkulisse in Schließstellung des Deckels einen Verlauf auf, bei welchem ein Abstand zwischen der Schlittenkulisse und dem Deckel in Fahrzeuglängsrichtung nach hinten zunächst gleich bleibt und sich anschließend verändert. Das Verändern und Gleichbleiben ist wiederum analog zu oben zu verstehen.

Gemäß einer weiteren Ausgestaltung der Erfindung weist in Schließstellung des Deckels der Verlauf der Schlittenkulisse bezüglich der Fahrzeuglängsrichtung nach hinten einen vorderen Abschnitt auf, in welchem der Abstand zwischen der Schlittenkulisse und dem Deckel gleich bleibt, und einen hinteren Abschnitt auf, in welchem sich der Abstand zwischen der Schlittenkulisse und dem Deckel in Fahrzeuglängsrichtung nach hinten verringert.

Bevorzugt befindet sich in Schließstellung des Deckels das zweite Koppelelement in dem hinteren Abschnitt der Schlittenkulisse und in einer Offenstellung des Deckels in dem vorderen Abschnitt der Schlittenkulisse.

Durch einen derartigen Verlauf der Schlittenkulisse ist es möglich, dass bei Verschieben des Schlittens die Ausstellstange unverschiebbar bezüglich des Schlittens mit diesem gekoppelt ist und nach hinten in Fahrzeuglängsrichtung verschoben wird zum Ausstellen des Hebels. Mittels der ortsfesten Kulisse wird schließlich gesteuert, dass nach dem Ausstellen des hinteren Ausstellhebels das zweite Koppelelement aus dem hinteren Abschnitt in den vorderen Abschnitt geführt wird, sodass der Schlitten relativ zu der Ausstellstange verschiebbar ist.

Gemäß einer weiteren Ausgestaltung wird die Ausstellstange beim Verschieben des Schlittens ausgehend von der Schließstellung des Deckels in einem bezüglich der Fahrzeuglängsrichtung hinteren Bereich angehoben. Mit anderen Worten wird der Deckel in vertikaler Richtung beziehungsweise in Z-Richtung während des Ausstellens angehoben. Dadurch erfährt die Ausstellstange eine Wippbewegung, da sie gleichzeitig im vorderen Bereich durch das Verriegeln mit der Führungsschiene eine entgegengesetzte Vertikalbewegung in Z-Richtung erfährt. Aufgrund dieser Wippbewegung ist es möglich, dass die Ausstellstange zum Verriegeln einen relativ großen Weg in Z-Richtung, beispielsweise mehr als einige Millimeter, zurücklegt. Dadurch kann die Ausstellstange sicher in der ortsfesten Kulisse unverschiebbar bezüglich der Führungsschiene verriegelt werden. Weiter muss die Verriegelung der Ausstellstange nicht in sehr engem Raum erfolgen. Dadurch können filigrane Bauteile vermieden werden, welche zudem negative Schaltgeräusche erzeugen würden.

Weitere Ausgestaltungen sind in den Unteransprüchen sowie in der nachfolgenden, ausführlichen Beschreibung eines Ausführungsbeispiels unter Zuhilfenahme der angehängten Figuren beschrieben.

Elemente oder Merkmale gleicher Konstruktion oder Funktion sind figurenübergreifend mit den gleichen Bezugszeichen versehen. Bereits mit Hilfe von Bezugszeichen beschriebene Elemente oder Merkmale sind nicht zwingend in allen Figuren mit Bezugszeichen versehen.

In den Figuren zeigen:
Figur 1 eine schematische, perspektivische Ansicht eines Fahrzeuges,
Figur 2 eine schematische Seitenansicht einer Anordnung mit einem Deckel für ein Fahrzeugdach des Fahrzeugs,
Figuren 3A und 3B schematische, vergrößerte Seitenteilschnittansichten der Anordnung in einer Schließstellung,
Figuren 4A und 4B zwei schematische, vergrößerte Seitenteilschnittansichten der Anordnung in einer Lüfterstellung,
Figuren 5A und 5B zwei zweite schematische, vergrößerte Seitenteilschnittansichten der Anordnung in der Lüfterstellung,
Figur 6 eine schematische, vergrößerte Seitenteilschnittansicht der Anordnung in einem hinteren Bereich in einer Schließstellung,
Figur 7 eine schematische, vergrößerte Seitenteilschnittansicht der Anordnung in dem hinteren Bereich in einer teilweisen Lüfterstellung und
Figur 8 eine schematische, vergrößerte Seitenteilschnittansicht der Anordnung in dem hinteren Bereich in der Lüfterstellung.

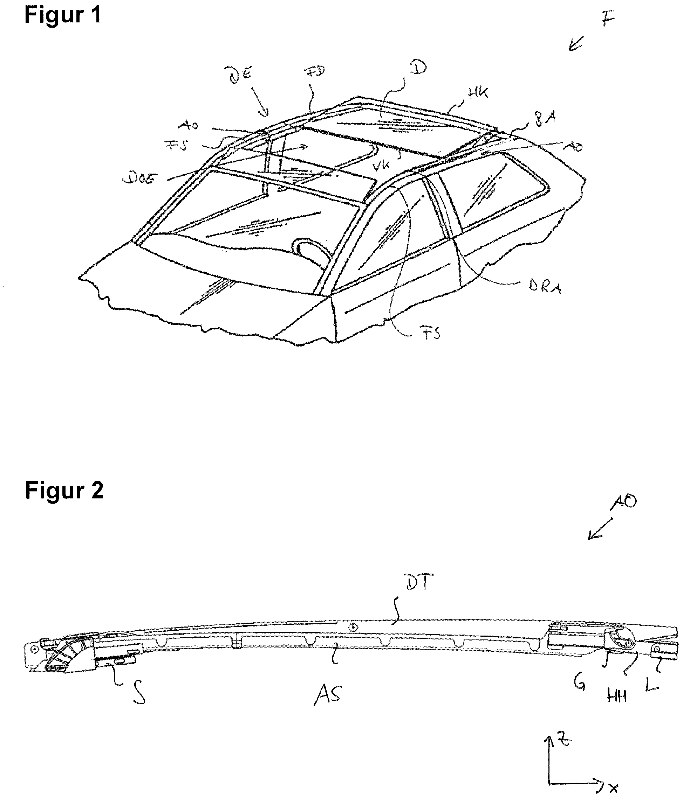

Figur 1 zeigt eine schematische, perspektivische Ansicht eines Fahrzeugs F mit einem Fahrzeugdach FD. Das Fahrzeugdach FD weist einen fahrzeugfesten Befestigungsabschnitt BA auf, der als Dachschale ausgebildet ist. Der fahrzeugfeste Befestigungsabschnitt BA ist mit einer Dachöffnung DOE versehen, die mittels eines verstellbaren, beweglichen Dachelements DE wahlweise verschlossen oder zumindest teilweise freigebbar ist.

Die Dachöffnung DOE wird von einem an dem Fahrzeugdach FD ausgebildeten Dachrahmenabschnitt DRA begrenzt. Der Dachrahmenabschnitt DRA hat vorzugsweise beidseitig angeordnete Führungsschienen FS.

Das Dachelement DE hat einen Deckel D und ist relativ verschiebbar bezüglich der Führungsschienen FS im Bereich des Befestigungsabschnitts BA gelagert. Dabei ist das Dachelement DE über einen Deckelträger und Anordnungen AO in den Führungsschienen FS verschiebbar gelagert ist. Der Deckel D ist vorzugsweise als Glasdeckel ausgebildet.

Die im Bereich der Führungsschienen FS angeordneten Anordnungen AO dienen dem Zweck, den Deckel D, der die Dachöffnung DOE des Fahrzeugdachs FD verschließt, aus einer Schließstellung in eine Offenstellung zu verschieben, um so die Dachöffnung DOE des Fahrzeugdachs FD freizugeben. Hierzu weisen die Anordnungen AO die Ausstellmittel auf. Zum Öffnen wird der Deckel D in einem hinteren Bereich angehoben und über einen hinteren Teil des Fahrzeugdachs FD geschoben. Dazu ist es erforderlich, dass der Deckel D angehoben wird, da er in Schließstellung bündig mit der Oberseite des Fahrzeugdachs FD abschließt. Bei einem typischen Bewegungsablauf wird zunächst eine hintere Kante HK des Deckels D ausgestellt. Diese Zwischenposition wird auch als eine Lüfterstellung bezeichnet. Im weiteren Verlauf der Öffnungsbewegung wird der Deckel D in Fahrzeuglängsrichtung nach hinten in die Offenstellung verschoben.

Dieser typische Bewegungsablauf wird mit Hilfe der Anordnungen AO bewerkstelligt, welche anhand der folgenden Figuren 2 bis 8 genauer beschrieben werden. Dabei ist in diesen Figuren 2 bis 8 jeweils nur eine Anordnung AO auf einer Seite mit der zugehörigen Mechanik dargestellt. Alle Teile sind jedoch spiegelbildlich zu einer Mittellängsebene des Fahrzeugs F auf beiden Seiten der Dachöffnung DOE angeordnet. Die Anordnung AO kann auch als Ausstellvorrichtung bezeichnet werden. Es gilt zu beachten, dass in den Figuren 2 bis 8 lediglich ein Deckelträger DT dargestellt ist, welcher mit dem Deckel D mechanisch fest gekoppelt ist. Somit ist der Deckel D mit den Ausstellmitteln direkt gekoppelt und mit Hilfe dieser bewegbar. Ein Verschieben des Deckels D ist demnach gleichbedeutend mit einem Verschieben des Deckelträgers DT.

Figur 2 zeigt eine schematische Seitenansicht einer Anordnung AO. Die Ausstellmittel der Anordnung AO umfassen einen Schlitten S, der in Fahrzeuglängsrichtung mittels eines Antriebs in einer Führungsschiene FS verschiebbar ist. Weiter umfassen die Ausstellmittel eine Ausstellstange AS, ein ortsfestes Lager L sowie einen hinteren Ausstellhebel HH. Der hintere Ausstellhebel HH ist schwenkbar mit einem Gleiter G verbunden, welcher verschiebbar an dem Deckelträger DT gekoppelt ist. In Figur 2 ist die Schließstellung des Deckels D dargestellt.

Wird ausgehend von der Schließstellung des Deckels D der Schlitten S verschoben, so wird die Ausstellstange AS ebenfalls parallel zur Fahrzeuglängsrichtung nach hinten verschoben, da die Ausstellstange AS mit dem Schlitten S zunächst mechanisch gekoppelt ist. Dabei wird der hintere Ausstellhebel HH bezüglich des Lagers L verschwenkt, so dass der Deckelträger DT beziehungsweise der Deckel D im Bereich der hinteren Kante HK ausgestellt beziehungsweise angehoben wird. In diesem ausgestellten Zustand befindet sich der Deckel D in der Lüfterstellung. Wird der Schlitten S weiter nach hinten verschoben, wird der Schlitten S von der Ausstellstange AS entkoppelt. Dies bedeutet, dass die Ausstellstange AS nicht mehr in X-Richtung in dem Schlitten S verriegelt ist. Gleichzeitig wird die Ausstellstange AS im Bereich ihres vorderen Endes durch einen Verriegelungsmechanismus ortsfest bezüglich der Führungsschiene FS festgelegt. Dies bedeutet, dass der hintere Ausstellhebel HH ebenfalls arretiert in der ausgestellten Position gehalten ist. Bei einem weiteren Verschieben des Schlittens S nimmt dieser den Deckelträger DT mit und schiebt den Deckelträger DT und somit den Deckel D über das Fahrzeugdach FD in die Offenstellung. Dies ist wie beschrieben dadurch möglich, dass der hintere Ausstellhebel HH verschiebbar über den Gleiter G mit dem Deckelträger G gekoppelt ist.

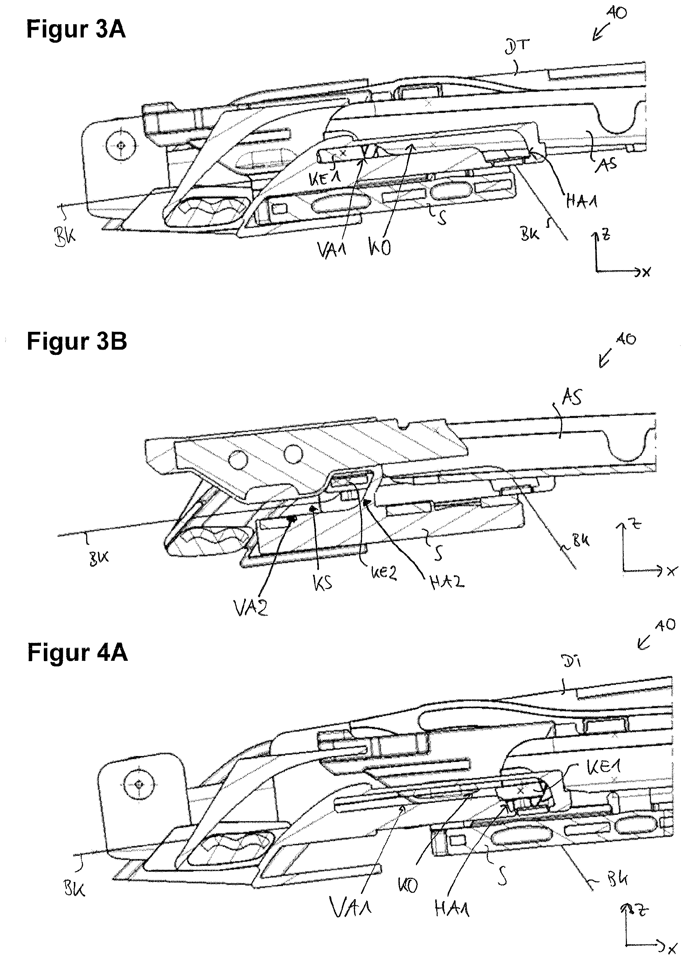

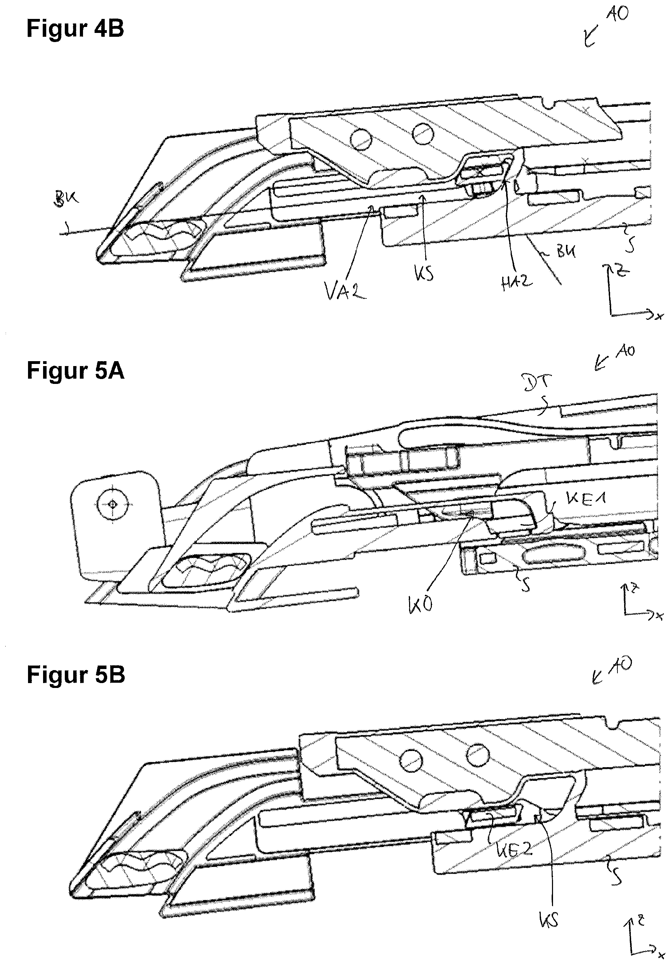

In den folgenden Figuren 3A bis 5B wird detailliert auf die Ausstellmittel der Anordnung AO im vorderen Bereich des Deckels D eingegangen, insbesondere auf das Verriegeln der Ausstellstange AS bezüglich der Führungsschiene FS. Die Figuren 3A bis 5B sind in Figurenpaare unterteilt, welche durch die Suffixe "A" und "B" gekennzeichnet sind. Ein Figurenpaar, beispielsweise 3A und 3B, zeigt dabei die Anordnung AO in einem bestimmten Zustand des beschriebenen Bewegungsablaufs, wobei zwei unterschiedliche jeweils teilweise geschnittene Seitenansichten der Anordnung AO zu einem gleichen Zeitpunkt schematisch dargestellt sind. Die Figuren 3A und 3B zeigen die Anordnung AO in der Schließstellung des Deckels D. Die Figuren 4A und 4B zeigen die Anordnung AO in der Lüfterstellung. Die Figuren 5A und 5B zeigen die Anordnung AO in einem weiteren Zustand, wobei sich der Deckel D weiter in der Lüfterstellung befindet. Die jeweiligen zwei teilweise geschnittenen Seitenansichten eines Figurenpaars verlaufen dabei durch zwei unterschiedliche Ebenen parallel zu der Bildebene der Figuren, wobei in den mit dem Suffix "A" bezeichneten Figuren der Fokus auf eine ortsfeste Kulisse KO des Fahrzeugs F und in den mit dem Suffix "B" bezeichneten Figuren auf eine Schlittenkulisse KS des Schlittens S gelegt wird. Allen Figuren 3A bis 5B ist gemein, dass sie ein vorderes Ende der Ausstellstange AS beziehungsweise eine vordere Kante VK des Deckels D darstellen (s. Figur 1).

Wie bereits erwähnt weist die Anordnung AO einen Schlitten S auf. Der Schlitten S weist eine Schlittenkulisse KS auf. Die Anordnung AO weist des Weiteren eine ortsfeste Kulisse KO auf. Die ortsfeste Kulisse KO ist dabei bezüglich der Führungsschiene FS ortsfest. Die Ausstellstange AS weist ein erstes Koppelelement KE1 und ein zweites Koppelelement KE2 auf, welche auf gegenüberliegenden Seiten der Ausstellstange AS angeordnet sind. Die beiden Koppelemente KE1 und KE2 sind als Gleitelemente ausgebildet. Die Koppelemente KE1 und KE2 sind optional einstückig mit der Ausstellstange AS gebildet.

Mittels des ersten Koppelelements KE1 ist die Ausstellstange AS in Schließstellung des Deckels D in der ortsfesten Kulisse KO geführt. Die ortsfeste Kulisse KO weist einen vorderen Abschnitt VA1 und einen hinteren Abschnitt HA1 auf. Der vordere Abschnitt VA1 weist einen Verlauf auf, bei welchem sich in Schließstellung des Deckels D ein Abstand zwischen der ortsfesten Kulisse KO und dem Deckel D im Wesentlichen nicht verändert. Der hintere Abschnitt HA1 der ortfesten Kulisse KO weist einen Verlauf auf, bei welchem sich der Abstand zwischen dem Deckel D und der ortsfesten Kulisse KO in Fahrzeuglängsrichtung nach hinten vergrößert.

Mittels des zweiten Koppelelements KE2 ist die Ausstellstange AS in Schließstellung des Deckels D in der Schlittenkulisse KS geführt. Die Schlittenkulisse KS weist einen Verlauf auf, bei welchem in Schließstellung des Deckels D in einem vorderen Abschnitt VA2 der Abstand zwischen dem Deckel und der Schlittenkulisse KS sich nicht verändert beziehungsweise gleich bleibt. In einem hinteren Abschnitt HA2 der Schlittenkulisse KS weist die Schlittenkulisse KS einen Verlauf auf, bei welchem sich der Abstand zwischen dem Deckel und der Schlittenkulisse KS verringert.

Der Abstand zwischen dem Deckel D und der jeweiligen Kulisse KS bzw. KO ist dabei auf eine Bahnkurve BK der jeweiligen Kulisse KS bzw. KO bezogen, wie sie beispielsweise in Figur 3B angedeutet ist. Die Bahnkurven BK sind dabei schematisch zu verstehen und geben nur bedingt Aufschluss über eine tatsächliche Länge bzw. Ausgestaltung der Kulissen KS bzw. KO.

In Schließstellung des Deckels D befindet sich das erste Koppelelement KE1 in dem vorderen Abschnitt VA1 der ortsfesten Kulisse KO (s. Figur 3A). Das zweite Koppelelement KE2 der Ausstellstange AS befindet sich in dem hinteren Abschnitt HA2 der Schlittenkulisse KS (s. Figur 3B). Somit ist die Ausstellstange AS mittels der ortsfesten Kulisse KO und dem ersten Koppelelement KE1 in Z-Richtung verriegelt beziehungsweise geführt. Dagegen ist eine Bewegung der Ausstellstange AS bezüglich der ortsfesten Kulisse KO in Fahrzeuglängsrichtung beziehungsweise X-Richtung freigegeben. Umgekehrt verhält es sich mit der Schlittenkulisse KS des Schlittens S, wobei die Ausstellstange mittels des zweiten Koppelelements KE2 in X-Richtung verriegelt ist, während eine Z-Bewegung freigegeben ist.

Wird nun der Schlitten S in Fahrzeuglängsrichtung nach hinten verschoben, so nimmt dieser die Ausstellstange AS in Fahrzeuglängsrichtung nach hinten mit. Dies liegt daran, dass die Ausstellstange mittels des zweiten Koppelelements KE2 in der Schlittenkulisse KS in X-Richtung verriegelt ist, während eine Bewegung der Ausstellstange AS parallel zu der Fahrzeuglängsrichtung mittels der ortsfesten Kulisse KO freigegeben ist.
Wird der Schlitten S weiter nach hinten verschoben, so wird der in den Figuren 4A und 4B gezeigte Zustand der Anordnung AO erreicht. Aufgrund des im hinteren Bereichs beziehungsweise in den hinteren Abschnitten HA1 und HA2 der ortsfesten Kulisse KO beziehungsweise Schlittenkulisse KS gegenläufigen Verläufe kommt es zu einer so genannten Übergabe der beiden Koppelelemente KE1 und KE2, wobei die beiden Kulissen KO und KS ihre Verriegelungsrichtungen vertauschen. Dabei wird aufgrund der Führung der ortsfesten Kulisse KO in Z-Richtung das erste Koppelelement KE1 in den hinteren Abschnitt HA2 der ortsfesten Kulisse KO geführt, während das zweite Koppelelement KE2 aus dem hinteren Abschnitt HA2 der Schlittenkulisse KS in den vorderen Abschnitt VA2 der Schlittenkulisse KS bewegt wird. Der Deckel D befindet sich somit zumindest teilweise in der Lüfterstellung.

Wird der Schlitten S nun weiter verschoben kommt es zu dem in Figur 5A und 5B gezeigten Zustand, wobei sich das erste Koppelelement KE1 nun vollständig in dem hinteren Abschnitt HA1 der ortsfesten Kulisse KO befindet. Somit ist die Ausstellstange AS mittels des ersten Koppelelements KE1 in der ortsfesten Kulisse KO in X-Richtung verriegelt. Gleichzeitig ist mittels der Schlittenkulisse KS eine Bewegung in X-Richtung freigegeben. In Z-Richtung ist die Ausstellstange AS über das zweite Koppelelement KE2 nun in der Schlittenkulisse KS geführt.

Bei einem weiteren Verschieben des Schlittens S verlässt die Ausstellstange AS mittels des zweiten Koppelelements KE2 die Schlittenkulisse KS und somit den Schlitten S. Dabei können optional weitere, nicht näher beschriebene Mechanismen und/oder Elemente vorgesehen sein, um die Ausstellstange AS in der verriegelten Position zu halten.

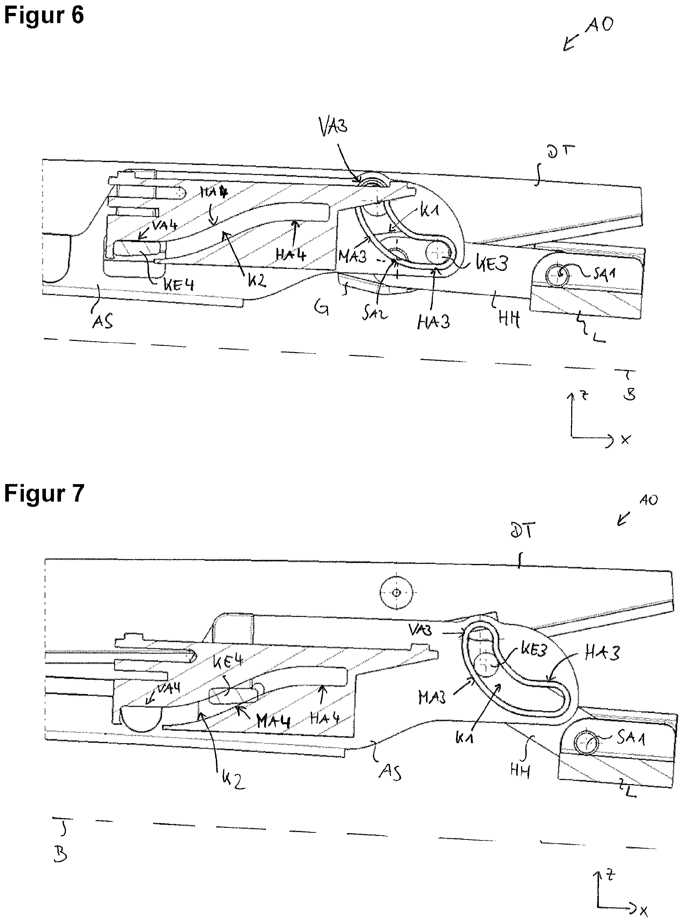

In dem in Figuren 5A und 5B gezeigten Zustand ist mittels der Ausstellstange AS der hintere Ausstellhebel HH ausgestellt. Das Ausstellen wird nachfolgend in den Figuren 6 bis 8 erneut beschrieben. Bei einem weiteren Verschieben des Schlittens S wird der Deckel D beziehungsweise der Deckelträger DT weiter nach hinten über das Fahrzeugdach FD in die Offenstellung verschoben. Dabei sind die Ausstellstange AS und der hintere Ausstellhebel HH in ihrer Position arretiert.

Mittels der beschriebenen Anordnung AO ist es auf einfache Art und Weise möglich, die Ausstellstange AS zum Ausstellen des hinteren Ausstellhebels HH zu betätigen und nach Ausstellen des Deckels D ortsfest bezüglich der Führungsschiene FS zu verriegeln. Dabei werden lediglich zwei Kulissen KO und KS benötigt. Vorteilhaft werden keine weiteren Komponenten wie filigrane Bauteile, Federelemente oder dergleichen benötigt. Mittels des beschriebenen Bewegungsablaufs lässt sich eine gute Kraftübertragung und Krafteinleitung bewerkstelligen. Weiter ist deutlich mehr Freiraum zum Abkoppeln der Ausstellstange AS von dem Schlitten S bzw. zum Verriegeln der Ausstellstange AS in X-Richtung vorhanden. Weiter wird eine Schaltsicherheit verbessert und das Entstehen von Geräuschen zumindest reduziert.

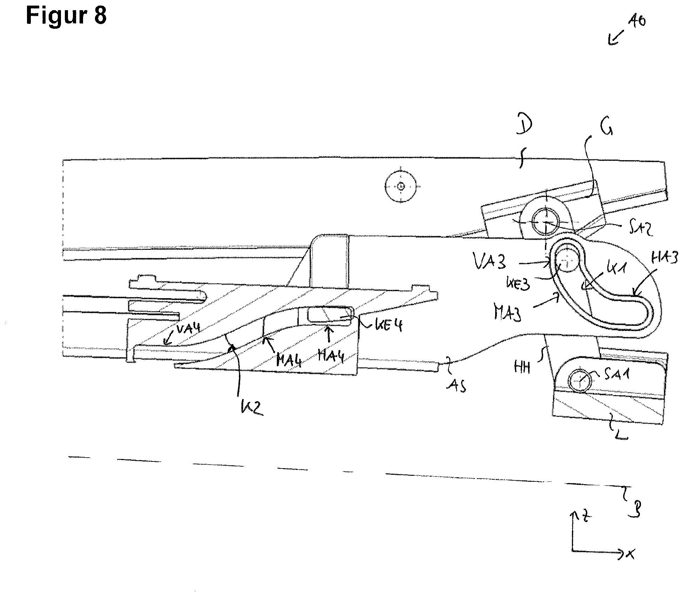

Wie anhand der Figuren 6 bis 8 beschrieben wird, kann durch Vorsehen eines besonderen, optionalen Bewegungsverlaufs der Ausstellstange AS im hinteren Bereich des Deckels D zum Ausstellen des hinteren Ausstellhebels HH eine weitere vorteilhafte Wirkung beziehungsweise ein weiterer vorteilhafter Effekt erzielt werden. Dabei korrespondiert der in Figur 6 gezeigte Zustand der Anordnung AO mit dem in Figuren 3A und 3B gezeigten Zustand. Der in Figur 7 gezeigte Zustand liegt während des Verschiebens des Schlittens S zwischen dem in Figuren 3A und 3B gezeigten Zustand und dem in Figuren 4A und 4B gezeigten Zustand. Der in Figur 8 gezeigte Zustand der Anordnung AO korrespondiert mit den in Figuren 4A bis 5B gezeigten Zuständen.

Der hintere Ausstellhebel HH ist schwenkbar bezüglich einer ersten Schwenkachse SA1 mit dem ortsfesten Lager L gekoppelt. Des Weiteren ist der hintere Ausstellhebel HH schwenkbar bezüglich einer zweiten Schwenkachse SA2 mit dem Gleiter G gekoppelt, welcher relativ verschiebbar an dem Deckelträger DT geführt ist.

Die Ausstellstange AS weist an ihrem hinteren Ende eine erste Kulisse K1 auf. Diese steht im Eingriff mit einem Koppelelement KE3 des hinteren Ausstellhebels HH. In Schließstellung des Deckels D weist die erste Kulisse K1 einen Verlauf auf, bei welchem sich ein Abstand zwischen der ersten Kulisse K1 und dem Deckel D in Fahrzeuglängsrichtung nach hinten zunächst verändert und anschließend gleich bleibt. Hierzu weist der Verlauf der ersten Kulisse K1 einen vorderen Abschnitt VA3 auf, welcher im Wesentlichen vertikal verläuft. Des Weiteren weist der Verlauf der ersten Kulisse K1 einen mittleren Abschnitt MA3 auf, in welchem sich der Abstand zwischen der ersten Kulisse K1 und dem Deckel D nach hinten vergrößert. Zusätzlich weist der Verlauf der ersten Kulisse K1 einen hinteren Abschnitt HA3 auf, in welchem der Abstand zwischen der ersten Kulisse K1 und dem Deckel D gleich bleibt. In Schließstellung des Deckels D befindet sich das Koppelelement KE3 des hinteren Ausstellhebels HH in dem hinteren Abschnitt HA3.

Wie in Figur 6 zu erkennen, ist das ortsfeste Lager L der Anordnung AO derart angeordnet, dass sich die erste Schwenkachse SA1 des ortsfesten Lagers L oberhalb eines gestrichelt angedeuteten Bodens B der Führungsschiene FS befindet. Als Boden B der Führungsschiene FS ist dabei eine Ebene normal zur Bildebene der Figuren 6 bis 8 zu verstehen, welche im Wesentlichen tangential zum Fahrzeugdach FD oder parallel zur Fahrzeuglängsrichtung unterhalb des Schlittens S verläuft und den größten Abstand zum Deckel D in Schließstellung aufweist. Wie erwähnt, ist der Schlitten S verschiebbar in der Führungsschiene FS angeordnet, wobei die Führungsschiene FS im Wesentlichen parallel zur Fahrzeuglängsrichtung verläuft. Die Führungsschiene FS besteht im Wesentlichen aus einem nach oben, das heißt zum Deckel D in Z-Richtung hin geöffneten C-Profil, innerhalb welchem der Schlitten S geführt ist.

Die Ausstellstange AS weist Koppelelement KE4 auf, mittels welchem die Ausstellstange AS in einer bezüglich der Führungsschiene FS ortsfesten zweiten Kulisse K2 geführt ist. Die zweite Kulisse K2 weist in Schließstellung des Deckels D einen Verlauf mit einem vorderen Abschnitt VA4 auf, in welchem ein Abstand zwischen der zweiten Kulisse K2 und dem Deckel D gleich bleibt. Die zweite Kulisse K2 weist einen mittleren Abschnitt MA4 auf, in welchem sich ein Abstand zwischen der zweiten Kulisse K2 und dem Deckel D in Fahrzeuglängsrichtung nach hinten verringert. Schließlich weist die zweite Kulisse K2 einen hinteren Abschnitt HA4 auf, bei welchem ein Abstand zwischen der zweiten Kulisse K2 und dem Deckel D gleich bleibt. In Schließstellung des Deckels D befindet sich das Koppelelement KE4 der Ausstellstange AS in dem vorderen Abschnitt VA4 der zweiten Kulisse K2.

Wird nun der Schlitten S in Öffnungsrichtung, also in X-Richtung mittels des Antriebs nach hinten verschoben, so wird die Ausstellstange AS aufgrund der mechanischen Kopplung zu dem Schlitten S wie beschrieben nach hinten verschoben. Dabei bewegt sich das Koppelelement KE4 der Ausstellstange AS in Richtung des mittleren Abschnitts MA4 der zweiten Kulisse K2. Der hintere Ausstellhebel HH wird zunächst in seiner Position nicht verändert, also nicht um die Schwenkachse SA1 des ortsfesten Lagers L verschwenkt. Vielmehr wird die Ausstellestange AS relativ zu dem hinteren Ausstellhebel HH in X-Richtung verschoben, wobei das Koppelelement KE3 des hinteren Ausstellhebels HH in der ersten Kulisse K1 in Richtung des mittleren Abschnitts MA3 geführt wird. Sobald das das Koppelelement KE3 sich in dem mittleren Abschnitt MA3 der ersten Kulisse K1 befindet, wird durch die Bewegung des Schlittens S der hintere Ausstellhebel HH um die Schwenkachse SA1 verschwenkt, wodurch der Deckelträger DT im Bereich seiner hinteren Kante HK angehoben wird. Zugleich wird die Ausstellstange AS durch die zweite Kulisse K2 über das Koppelelement KE4 angehoben, sodass diese eine vertikale Bewegung in Z-Richtung zusätzlich zu der Horizontalbewegung in X-Richtung erfährt. Der Deckelträger DT und somit der Deckel D sind nun zumindest teilweise ausgestellt. Dies ist in Figur 7 dargestellt.

Wird nun der Schlitten S weiter in der Führungsschiene FS nach hinten verschoben, so wird das Koppelelement KE4 der Ausstellstange AS in der zweiten Kulisse K2 in den hinteren Abschnitt HA4 geführt und das Koppelelement KE3 des hinteren Ausstellhebels HH befindet sich in dem vorderen Abschnitt VA3 der ersten Kulisse K1. Dabei erreicht der Deckel D seine maximal ausgestellte Position (s. Figur 8).

Wie in Figur 8 weiter zu erkennen ist, hat während des Ausstellvorgangs die Ausstellstange AS im Bereich ihres hinteren Endes HE, in welchem auch die erste Kulisse K1 angeordnet ist, das ortsfeste Lager L überfahren. Insbesondere hat die Ausstellstange AS eine Ebene überfahren, welche von den beiden Schwenkachsen SA1 und SA2 in Schließstellung des Deckels D aufgespannt wird (s. Figur 6).

Dies bedeutet, dass die Ausstellstange AS mit Hilfe der zweiten Kulisse K2 in vertikaler Richtung derart angehoben worden ist, dass sich diese in Z-Richtung oberhalb des Lagers L sich befindet. Dies ist notwendig, damit die Ausstellstange AS beim Ausstellen des hinteren Ausstellhebels HH nicht mit dem Lager L kollidiert. Durch die Anordnung des Lagers L oberhalb des Bodens B der Führungsschiene FS, wie vorher beschrieben, kann erheblich an Bauraum eingespart werden, was unter anderem dazu führt, dass mehr Kopffreiheit in einem Fahrzeug vorgesehen werden kann.

Wird der Schlitten S weiter in der Führungsschiene VS verschoben, ausgehend von der in Figur 8 gezeigten Lüfterstellung, wird die Ausstellstange AS wie anhand der Figuren 3A bis 5A beschrieben ortsfest bezüglich der Führungsschiene VS mittels des Verriegelungsmechanismus verriegelt und von dem Schlitten S entkoppelt.

Mittels der gezeigten Ausgestaltung der Anordnung AO im hinteren Bereich wird erreicht, dass die Ausstellstange AS an ihrem hinteren Ende eine Vertikalbewegung in der Bildebene nach oben vollzieht. Gleichzeitig macht die Ausstellstange AS wie anhand der Figuren 3A bis 5B beschrieben an ihrem vorderen Ende eine Vertikalbewegung in die entgegengesetzte Richtung, also in Bildebene nach unten. Dadurch macht die Ausstellstange AS insgesamt während des Verschiebens des Schlittens S zum Ausstellen des hinteren Ausstellhebels HH eine Wippbewegung, welche dazu führt, dass zum Verriegeln der Ausstellstange AS entsprechend den Figuren 3A bis 5B die Ausstellstange AS einen besonders großen Hub in Vertikalrichtung macht. Dadurch kann eine Sicherheit zum Verriegeln der Ausstellstange AS bezüglich der Führungsschiene FS erhöht werden, da diese nicht nur wenige Millimeter in Vertikalrichtung verschwenkt wird. Würde die Ausstellstange AS im Wesentlichen parallel zur Fahrzeuglängsrichtung beziehungsweise zur Dachhaut verschoben werden und keine Vertikalbewegung nach oben an ihrem hinteren Ende einnehmen, so könnte die Ausstellstange AS in ihrem vorderen Ende keinen so großen Hub in Z-Richtung vollziehen, sondern nur eine geringe Vertikalbewegung nach unten in der Bildebene.

Ein weiterer Vorteil der Anordnung AO sowohl in dem vorderen Bereich zum Verriegeln der Ausstellstange AS ist es, dass keine Schaltgeräusche entstehen, da keine Federelemente oder Rastmechanismen vorgesehen sind.

### Bezugszeichenliste

- AO: Anordnung
- AS: Ausstellstange
- BA: Befestigungsabschnitt
- BK: Bahnkurve
- D: Deckel
- DE: Deckelelement
- DOE: Dachöffnung
- DRA: Dachrahmenabschnitt
- DT: Deckelträger
- F: Fahrzeug
- FD: Fahrzeugdach
- FS: Führungsschiene
- G: Gleiter
- HA1, HA2, HA3, HA4: hinterer Abschnitt
- HH: hinterer Ausstellhebel
- HK: hintere Kante
- K1: erste Kulisse
- K2: zweite Kulisse
- KE1, KE2, KE3, KE4: Koppelelement
- KO: ortsfeste Kulisse
- KS: Schlittenkulisse
- L: Lager
- MA3, MA4: mittlerer Abschnitt
- S: Schlitten
- SA1: erste Schwenkachse
- SA2: zweite Schwenkachse
- VA1, VA2, VA3, VA4: vorderer Abschnitt
- VK: vordere Kante

## Patentansprüche

1. Anordnung (AO) mit einem Deckel (D) für ein Fahrzeugdach (FD), der ausgehend von einer Schließstellung zum Verschließen einer Dachöffnung (DOE) zum Öffnen durch Ausstellmittel in seinem hinteren Bereich anhebbar und nach hinten über das Fahrzeugdach (FD) in eine Offenstellung verschiebbar ist, wobei die Ausstellmittel
- einen in Fahrzeuglängsrichtung mittels eines Antriebs in einer Führungsschiene (FS) verschiebbaren Schlitten (S) mit einer Schlittenkulisse (KS) aufweisen, **dadurch gekennzeichnet, dass** die Ausstellmittel
- eine bezüglich der Führungsschiene (FS) ortsfeste Kulisse (KO) aufweisen; und
- eine mittels des Schlittens (S) in Fahrzeuglängsrichtung verschiebbare Ausstellstange (AS) aufweisen, welche in der Schließstellung des Deckels (D) mittels eines ersten Koppelelements (KE1) mit der ortsfesten Kulisse (KO) und mittels eines zweiten Koppelelements (KE2) mit der Schlittenkulisse (KS) gekoppelt ist;
wobei
- die ortsfeste Kulisse (KO) und die Schlittenkulisse (KS) bezüglich der Fahrzeuglängsrichtung zumindest teilweise gegenläufig verlaufen derart, dass
ausgehend von der Schließstellung des Deckels (D) bei einem Verschieben des Schlittens (S) die Ausstellstange (AS) zum Ausstellen eines hinteren Ausstellhebels (HH) zunächst relativ zur Führungsschiene (FS) verschoben wird und nach dem Ausstellen bei einem weiteren Verschieben des Schlittens (S) verriegelt ist.

2. Anordnung (AO) nach Anspruch 1, wobei die ortsfeste Kulisse (KO) in Schließstellung des Deckels (D) einen Verlauf aufweist, bei welchem ein Abstand zwischen der ortsfesten Kulisse (KO) und dem Deckel (D) in Fahrzeuglängsrichtung nach hinten zunächst gleich bleibt und sich anschließend verändert.

3. Anordnung (AO) nach Anspruch 2, wobei in Schließstellung des Deckels (D) der Verlauf der ortsfesten Kulisse (KO) bezüglich der Fahrzeuglängsrichtung nach hinten einen vorderen Abschnitt (VA1) aufweist, in welchem der Abstand zwischen der ortsfesten Kulisse (KO) und dem Deckel (D) gleich bleibt, und einen hinteren Abschnitt (HA1) aufweist, in welchem sich der Abstand zwischen der ortsfesten Kulisse (KO) und dem Deckel (D) in Fahrzeuglängsrichtung nach hinten vergrößert.

4. Anordnung (AO) nach Anspruch 3, wobei sich in Schließstellung des Deckels (D) das erste Koppelelement (KE1) in dem vorderen Abschnitt (VA1) der ortsfesten Kulisse (KO) und in der Offenstellung des Deckels (D) in dem hinteren Abschnitt (HA1) der ortsfesten Kulisse (KO) befindet.

5. Anordnung (AO) nach einem der vorhergehenden Ansprüche, wobei die Schlittenkulisse (KS) in Schließstellung des Deckels (D) einen Verlauf aufweist, bei welchem ein Abstand zwischen der Schlittenkulisse (KS) und dem Deckel (D) in Fahrzeuglängsrichtung nach hinten zunächst gleich bleibt und sich anschließend verändert.

6. Anordnung (AO) nach Anspruch 5, wobei in Schließstellung des Deckels (D) der Verlauf der Schlittenkulisse (KS) bezüglich der Fahrzeuglängsrichtung nach hinten einen vorderen Abschnitt (VA2) aufweist, in welchem der Abstand zwischen der Schlittenkulisse (KS) und dem Deckel (D) gleich bleibt, und einen hinteren Abschnitt (HA2) aufweist, in welchem sich der Abstand zwischen der Schlittenkulisse (KS) und dem Deckel (D) in Fahrzeuglängsrichtung nach hinten verringert.

7. Anordnung (AO) nach Anspruch 6, wobei sich in Schließstellung des Deckels (D) das zweite Koppelelement (KE2) in dem hinteren Abschnitt (HA2) der Schlittenkulisse (KS) und in der Lüfterstellung des Deckels (D) in dem vorderen Abschnitt (VA2) der Schlittenkulisse (KS) befindet.

8. Anordnung (AO) nach einem der vorhergehenden Ansprüche, wobei die Ausstellstange (AS) beim Verschieben des Schlittens (S) ausgehend von der Schließstellung des Deckels (D) in einem bezüglich der Fahrzeuglängsrichtung hinteren Bereich angehoben wird.

9. Anordnung (AO) nach einem der vorhergehenden Ansprüche,
wobei die Koppelelemente (KE1, KE2) als Gleitelemente, insbesondere Drehgleiter, ausgebildet sind.

## Claims

1. Arrangement (AO) with a cover (D) for a vehicle roof (FD), which cover (D), starting from a closed position for closing a roof opening (DOE), is able to be raised for opening using deployment means in the rear region thereof and which is able to be displaced toward the rear over the vehicle roof (FD) into an open position, wherein the deployment means have
- a slide (S) which is able to be displaced in a guide rail (FS) in a longitudinal direction of the vehicle by means of a drive and which has a slide guide link (KS); ***characterized in that** the deployment means have*
- a guide link (KO) which is stationary relative to the guide rail (FS); and
- a deployment rod (AS) which is able to be displaced in the longitudinal direction of the vehicle by means of the slide (S) and which is coupled in the closed position of the cover (D) by means of a first coupling element (KE1) to the stationary guide link (KO) and by means of a second coupling element (KE2) to the slide guide link (KS);
wherein
- the stationary guide link (KO) and the slide guide link (KS) extend with respect to the longitudinal direction of the vehicle at least partially in opposing directions in such a manner that, starting from the closed position of the cover (D), when the slide (S) is displaced, the deployment rod (AS) is initially displaced in order to deploy a rear deployment lever (HH) relative to the guide rail (FS) and after the deployment is locked in the event of a further displacement of the slide (S).

2. Arrangement (AO) according to Claim 1, wherein the stationary guide link (KO) in the closed position of the cover (D) has a path in which a spacing between the stationary guide link (KO) and the cover (D) in the longitudinal direction of the vehicle initially remains the same toward the rear and subsequently changes.

3. Arrangement (AO) according to Claim 2, wherein in the closed position of the cover (D) the path of the stationary guide link (KO) with respect to the longitudinal direction of the vehicle toward the rear has a front portion (VA1) in which the spacing between the stationary guide link (KO) and the cover (D) remains the same, and has a rear portion (HA1) in which the spacing between the stationary guide link (KO) and the cover (D) in the longitudinal direction of the vehicle increases toward the rear.

4. Arrangement (AO) according to Claim 3, wherein, in the closed position of the cover (D), the first coupling element (KE1) is located in the front portion (VA1) of the stationary guide link (KO) and, in the open position of the cover (D), in the rear portion (HA1) of the stationary guide link (KO).

5. Arrangement (AO) according to any one of the preceding claims, wherein the slide guide link (KS) in the closed position of the cover (D) has a path in which a spacing between the slide guide link (KS) and the cover (D) in the longitudinal direction of the vehicle initially remains the same toward the rear and subsequently changes.

6. Arrangement (AO) according to Claim 5, wherein, in the closed position of the cover (D), the path of the slide guide link (KS) with respect to the longitudinal direction of the vehicle toward the rear has a front portion (VA2), in which the spacing between the slide guide link (KS) and the cover (D) remains the same, and has a rear portion (HA2), in which the spacing between the slide guide link (KS) and the cover (D) in the longitudinal direction of the vehicle decreases toward the rear.

7. Arrangement (AO) according to Claim 6, wherein, in the closed position of the cover (D), the second coupling element (KE2) is located in the rear portion (HA2) of the slide guide link (KS) and in the ventilator position of the cover (D) in the front portion (VA2) of the slide guide link (KS).

8. Arrangement (AO) according to any one of the preceding claims, wherein the deployment rod (AS) is lifted when the slide (S) is displaced starting from the closed position of the cover (D) in a rear region with respect to the longitudinal direction of the vehicle.

9. Arrangement (AO) according to any one of the preceding claims, wherein the coupling elements (KE1, KE2) are constructed as sliding elements, in particular rotary sliders.

## Revendications

1. Agencement (AO) comprenant un couvercle (D) pour un toit de véhicule (FD), qui peut être levé dans sa zone arrière par des moyens de relevage à partir d'une position fermée permettant de fermer une ouverture de toit (DOE), pour l'ouverture de cette dernière, et, dans une position ouverte, peut être déplacé vers l'arrière au-dessus du toit de véhicule (FD), les moyens de relevage comprenant :
- un coulisseau (S) pouvant être déplacé dans un rail de guidage (FS) dans la direction longitudinale du véhicule au moyen d'un entraînement, comprenant une coulisse de coulisseau (KS), **caractérisé en ce que** les moyens de relevage comprennent :
- une coulisse (KO) fixée par rapport au rail de guidage (FS) ; et
- une tige de relevage (AS) pouvant être déplacée dans la direction longitudinale du véhicule au moyen du coulisseau (S), qui, dans la position fermée du couvercle (D), est accouplée avec la coulisse fixe (KO) au moyen d'un premier élément d'accouplement (KE1) et est accouplée avec le coulisseau de coulisse (KS) au moyen d'un deuxième élément d'accouplement (KE2) ;
- la coulisse fixe (KO) et le coulisseau de coulisse (KS) suivant au moins en partie un parcours opposé par rapport à la direction longitudinale du véhicule, de telle sorte que
à partir de la position fermée du couvercle (D), lors d'un déplacement du coulisseau (S), la tige de relevage (AS) soit tout d'abord déplacée par rapport au rail de guidage (FS) pour relever un levier de relevage arrière (HH) et, après le relevage, verrouillée lors d'un déplacement supplémentaire du coulisseau (S).

2. Agencement (AO) selon la revendication 1, dans lequel la coulisse fixe (KO) présente, dans la position fermée du couvercle (D), un parcours selon lequel un écart entre la coulisse fixe (KO) et le couvercle (D) dans la direction longitudinale du véhicule reste tout d'abord identique vers l'arrière, puis se modifie.

3. Agencement (AO) selon la revendication 2, dans lequel, dans la position fermée du couvercle (D), le parcours de la coulisse fixe (KO) présente, par rapport à la direction longitudinale du véhicule vers l'arrière, une section avant (VA1), dans laquelle l'écart entre la coulisse fixe (KO) et le couvercle (D) reste identique, et une section arrière (HA1), dans laquelle l'écart entre la coulisse fixe (KO) et le couvercle (D) s'agrandit dans la direction longitudinale du véhicule vers l'arrière.

4. Agencement (AO) selon la revendication 3, dans lequel, dans la position fermée du couvercle (D), le premier élément d'accouplement (KE1) se trouve dans la section avant (VA1) de la coulisse fixe (KO) et, dans la position ouverte du couvercle (D), se trouve dans la section arrière (HA1) de la coulisse fixe (KO).

5. Agencement (AO) selon l'une quelconque des revendications précédentes, dans lequel la coulisse de coulisseau (KS) présente, dans la position fermée du couvercle (D), un parcours selon lequel un écart entre la coulisse de coulisseau (KS) et le couvercle (D) dans la direction longitudinale du véhicule vers l'arrière reste tout d'abord identique, puis se modifie.

6. Agencement (AO) selon la revendication 5, dans lequel, dans la position fermée du couvercle (D), le parcours de la coulisse de coulisseau (KS) présente, par rapport à la direction longitudinale du véhicule vers l'arrière, une section avant (VA2), dans laquelle l'écart entre la coulisse de coulisseau (KS) et le couvercle (D) reste identique, et une section arrière (HA2), dans laquelle l'écart entre la coulisse de coulisseau (KS) et le couvercle (D) diminue dans la direction longitudinale du véhicule vers l'arrière.

7. Agencement (AO) selon la revendication 6, dans lequel, dans la position fermée du couvercle (D), le deuxième élément d'accouplement (KE2) se trouve dans la section arrière (HA2) de la coulisse de coulisseau (KS) et, dans la position d'aération du couvercle (D), se trouve dans la section avant (VA2) de la coulisse de coulisseau (KS).

8. Agencement (AO) selon l'une quelconque des revendications précédentes, dans lequel la tige de relevage (AS) est levée dans une zone arrière par rapport à la direction longitudinale du véhicule lors d'un déplacement du coulisseau (S) à partir de la position fermée du couvercle (D).

9. Agencement (AO) selon l'une quelconque des revendications précédentes, dans lequel les éléments d'accouplement (KE1, KE2) sont configurés sous la forme d'éléments de glissement, notamment de patins rotatifs.
